(19) Europäisches Patentamt
European Patent Office
Office européen des brevets

(11) **EP 4 209 786 A1**

(12) **EUROPEAN PATENT APPLICATION**
published in accordance with Art. 153(4) EPC

(43) Date of publication:
**12.07.2023 Bulletin 2023/28**

(21) Application number: **21864305.4**

(22) Date of filing: **31.08.2021**

(51) International Patent Classification (IPC):
**G01N 37/00** (2006.01)    **C12M 1/00** (2006.01)
**G01N 35/02** (2006.01)    **G01N 35/08** (2006.01)
**B01J 19/00** (2006.01)    **G01N 21/03** (2006.01)

(52) Cooperative Patent Classification (CPC):
**B01J 19/00; C12M 1/00; G01N 21/03; G01N 35/02;
G01N 35/08; G01N 37/00**

(86) International application number:
**PCT/JP2021/031830**

(87) International publication number:
**WO 2022/050247 (10.03.2022 Gazette 2022/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **02.09.2020   JP 2020147507**

(71) Applicant: TOPPAN INC.
**Tokyo 110-0016 (JP)**

(72) Inventors:
• **GOTO Keisuke**
  **Tokyo 110-0016 (JP)**
• **MAKINO Yoichi**
  **Tokyo 110-0016 (JP)**
• **WADA Shinichi**
  **Tokyo 110-0016 (JP)**
• **SHINOHARA Yuichiro**
  **Tokyo 110-0016 (JP)**

(74) Representative: **Plasseraud IP
66, rue de la Chaussée d'Antin
75440 Paris Cedex 09 (FR)**

(54) **FLUID DEVICE AND USE THEREOF**

(57)     A fluidic device including a substrate at least part of which has a well array of a plurality of regularly arranged wells that have the same shape as each other and are open to a surface of the substrate; and a cover member facing the well array, wherein: a space between the well array and the cover member forms a flow path through which a fluid flows; and the following formula (1) is satisfied: $0.8 \leq Da/Dab < 1 ... (1)$ where: $Dab$ represents a distance between a centroid $Ca$ of an opening of a well A of the plurality of wells of the well array and a centroid $Cb$ of an opening of a well B of the plurality of wells that is closest to the well A; and $Da$ represents a diameter of a circle having the same area as the opening of the well A.

FIG.1

EP 4 209 786 A1

**Description**

[Technical Field]

The present invention relates to a fluidic device and use of the same. More specifically, the present invention relates to a fluidic device, a method of isolating an aqueous medium, and a method of detecting a detection target.
The present application claims priority to Japanese Patent Application No. 2020-147507 filed September 2, 2020, the entire contents of which are incorporated herein by reference.

[Background Art]

Techniques for detecting biomolecules in a fluidic device are known. For example, in DNA microarray techniques, in some cases, biomolecules are introduced into micropores, and a reaction accompanied by heating is performed to detect biomolecules. Furthermore, techniques capable of single-molecule detection of biomolecules are known. Examples of such techniques include digital measurement techniques such as digital enzyme-linked immunosorbent assay (digital ELISA), digital polymerase chain reaction (digital PCR), and digital invasive cleavage assay (digital ICA).
In these techniques, an aqueous medium containing biomolecules needs to be isolated in minute reaction spaces. The inventors have previously developed a method of isolating an aqueous medium in which an aqueous medium is supplied to a flow path of a reaction vessel having the flow path and a plurality of wells, to fill the plurality of wells with the aqueous medium, and then an oil-based sealing liquid is supplied to the flow path to seal the aqueous medium in the plurality of wells with the oil-based sealing liquid, allowing the plurality of wells to serve as a plurality of independent reaction spaces (see, for example, PTL 1).

[Citation List]

[Patent Literature]

[PTL 1] WO 2015/115635 A

[Summary of the Invention]

[Technical Problem]

However, the inventors have found that if wells of a well array formed on a substrate have a small volume, in some cases, when a reagent or the like is introduced into the wells, air in the wells is not replaced with the reagent or the like and remains in the wells, and this may hinder detection of biomolecules.
Thus, an object of the present invention is to provide a technique for suppressing air bubbles from remaining in wells of a fluidic device having a well array when an aqueous medium is introduced into the wells.

[Solution to Problem]

The present invention includes the following aspects.

[1] A fluidic device including:

a substrate at least part of which has a well array of a plurality of regularly arranged wells that have the same shape as each other and are open to a surface of the substrate; and
a cover member facing the well array, wherein:

a space between the well array and the cover member forms a flow path through which a fluid flows; and
the following formula (1) is satisfied:

$$0.8 \leq Da/Dab < 1 \ ... \ (1)$$

where:

Dab represents a distance between a centroid Ca of an opening of a well A of the plurality of wells of the well array and a centroid Cb of an opening of a well B of the plurality of wells that is closest to the well A; and

Da represents a diameter of a circle having the same area as the opening of the well A.

[2] The fluidic device according to [1], wherein:
a diameter of a circle having the same area as an opening of each of the wells is 1 μm or more and 50 μm or less.
[3] The fluidic device according to [1] or [2], wherein:
a ratio of a total area of openings of the wells of the well array to an area of the well array on the surface of the substrate is 30% or more and 90% or less.
[4] The fluidic device according to any one of [1] to [3], wherein:
the wells each have a volume of 10 fL or more and 100 pL or less.
[5] The fluidic device according to any one of [1] to [4], wherein:
a total volume of the wells of the well array is 0.2 μL or more and 2.0 μL or less.
[6] The fluidic device according to any one of [1] to [5], wherein:
a ratio of a total volume of the wells of the well array to a volume of the flow path is 5% or more and 40% or less.
[7] The fluidic device according to any one of [1] to [6], wherein:
a ratio of a diameter of a circle having the same area as an opening of each of the wells to a depth of the wells is 3% or more and 200% or less.
[8] The fluidic device according to any one of [1] to [7], wherein:
the surface of the substrate has a water contact angle of 70 degrees or more and 180 degrees or less.
[9] The fluidic device according to any one of [1] to [8], wherein:
the cover member has a surface facing the well array, the surface of the cover member having a water contact angle of 70 degrees or more and 180 degrees or less.
[10] A method of isolating an aqueous medium, the method including:

introducing an aqueous medium into the flow path of the fluidic device according to any one of [1] to [9]; and
isolating the aqueous medium in the wells of the well array by introducing a sealing liquid into the flow path after introduction of the aqueous medium.

[11] A method of detecting a detection target, the method including:

isolating an aqueous medium containing a detection target and a detection reagent by the method according to [10] and then heating the fluidic device to cause a reaction in the wells to generate a signal for detecting the detection target; and
detecting the signal.

[12] The method according to [11], wherein:
the detection target is a biomolecule.
[13] The method according to [11] or [12], wherein:
the reaction is an isothermal reaction.
[14] The method according to any one of [11] to [13], wherein:
the signal is fluorescence.

[Advantageous Effects of the Invention]

The present invention provides a technique for suppressing air bubbles from remaining in wells of a fluidic device having a well array when an aqueous medium is introduced into the wells.

[Brief Description of the Drawings]

Fig. 1 (a) is a schematic cross-sectional view illustrating a structure of a fluidic device, Fig. 1 (b) is a top view of the fluidic device, and Fig. 1 (c) is a partial enlarged view (plan view) of a well array of the fluidic device as viewed from the well opening side of the well array.
Figs. 2 (a) and (b) are photographs of a well array of a fluidic device of Experimental Example 1 subjected to bright field observation in which a buffer is supplied to the fluidic device of Example 1.
Figs. 3 (a) to (c) are photographs of a well array of a fluidic device of Experimental Example 1 subjected to bright field observation in which a buffer is supplied to the fluidic device of Comparative Example 1.

Figs. 4 (a) to (e) are photographs of a well array of a fluidic device of Experimental Example 1 subjected to bright field observation in which a buffer is supplied to the fluidic device of Comparative Example 2.

Figs. 5 (a) to (e) are cross-sectional views of a fluidic device showing the results of a simulation in Experimental Example 2.

Figs. 6 (a) to (c) are cross-sectional views of a fluidic device showing the results of a simulation in Experimental Example 3.

Figs. 7 (a) to (c) are cross-sectional views of a fluidic device showing the results of a simulation in Experimental Example 4.

Figs. 8 (a) to (c) are cross-sectional views of a fluidic device showing the results of a simulation in Experimental Example 5.

[Description of the Embodiments]

Embodiments of the present invention will be described in detail with reference to the drawings as appropriate. In the drawings, the same or corresponding parts are denoted by the same or corresponding reference signs, and redundant description is omitted. Dimensional ratios in the drawings may be exaggerated for convenience of illustration, and do not necessarily coincide with the actual dimensional ratios.

[Fluidic device]

In an embodiment, the present invention provides a fluidic device including:

a substrate at least part of which has a well array of a plurality of regularly arranged wells that have the same shape as each other and are open to a surface of the substrate; and
a cover member facing the well array, wherein:

a space between the well array and the cover member forms a flow path through which a fluid flows; and
the following formula (1) is satisfied:

$$0.8 \leq \mathrm{Da/Dab} < 1 \ ... \ (1)$$

where:

Dab represents a distance between a centroid Ca of an opening of a well A of the plurality of wells of the well array and a centroid Cb of an opening of a well B of the plurality of wells that is closest to the well A; and
Da represents a diameter of a circle having the same area as the opening of the well A.

As described later in the Examples, according to the fluidic device of the present embodiment, air bubbles can be suppressed from remaining in the wells of the well array when an aqueous medium is introduced into the wells.

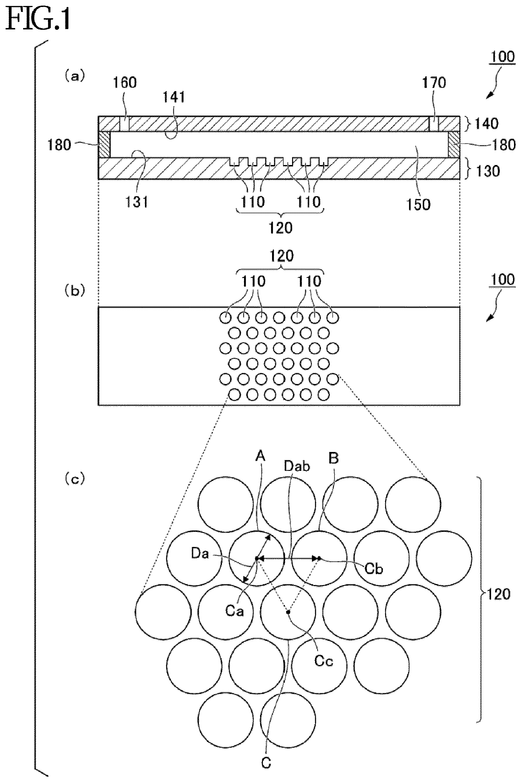

Fig. 1 (a) is a schematic cross-sectional view illustrating a structure of the fluidic device of the present embodiment, Fig. 1 (b) is a top view of the fluidic device of the present embodiment, and Fig. 1 (c) is a partial enlarged view (plan view) of the well array of the fluidic device of the present embodiment as viewed from the well opening side.
As shown in Fig. 1 (a), a fluidic device 100 of the present embodiment includes a substrate 130 at least part of which has a well array 120 in which a plurality of wells 110 that have the same shape and are open to one surface of the substrate 130 are regularly arranged, and a cover member 140 that is disposed to face the well array 120. A space 150 between the well array 120 and the cover member 140 forms a flow path through which a fluid flows. The flow path 150 is a continuous space between a surface 131 of the substrate 130 and a surface 141 of the cover member 140.
As shown in Figs. 1 (b) and (c), a distance Dab between a centroid Ca of an opening (i.e., a centroid of a shape defined by a periphery of an opening) of a well A of the plurality of wells 110 of the well array 120 and a centroid Cb of an opening of a well B of the plurality of wells 110 that is closest to the well A, and a diameter Da of a circle having the same area as the opening of the well A satisfy the following formula (1).

$$0.8 \leq \mathrm{Da/Dab} < 1 \ ... \ (1).$$

In the fluidic device of the present embodiment, the lower limit of the value DalDab is 0.8, and may be 0.83 or more. The upper limit of the value DalDab is less than 1, and may be 0.92 or less or may be approximately 0.9. Any combination of these lower and upper limits is possible.

As shown in Fig. 1 (a), the fluidic device of the present embodiment may have an introduction port 160 through which a fluid is introduced into the flow path 150, and a discharge port 170 through which the fluid is discharged from the flow path 150. In the example shown in Fig. 1 (a), the introduction port 160 and the discharge port 170 are provided in the cover member 140; however, the introduction port 160 and the discharge port 170 may be provided in a peripheral member 180 (described later), or may be provided in the substrate 130. The introduction port 160 and the discharge port 170 are arranged so that the well array 120 is located between the introduction port 160 and the discharge port 170.

The shapes of the introduction port 160 and the discharge port 170 are not particularly limited, and may be any shape that allows the supply of a fluid. The introduction port 160 and the discharge port 170 may have, for example, a circular shape, an elliptical shape, or a polygonal shape such as a triangular shape, a quadrangular shape, a pentagonal shape, a hexagonal shape, a heptagonal shape, or an octagonal shape.

As shown in Fig. 1 (a), the fluidic device of the present embodiment preferably includes the peripheral member 180. The peripheral member 180 serves as a spacer for separating the substrate 130 and the cover member 140 from each other to form the flow path 150. The peripheral member 180 is disposed between the substrate 130 and the cover member 140 so as to surround the well array 120, and constitutes a part of a wall surface of the flow path 150. That is, the flow path 150 is preferably surrounded by the peripheral member 180 located between the surface 131 of the substrate 130 and the surface 141 of the cover member 140. The peripheral member 180 may be provided as a member continuously connected to and integrated with the cover member 140.

The cross-sectional shape of the flow path 150 on a surface perpendicular to the flow direction is not particularly limited, and may be any shape that allows the supply of a fluid. The cross-sectional shape may be, for example, a square shape, a rectangular shape, a triangular shape, a circular shape, an elliptical shape, or the like. The cross-sectional shape of the flow path 150 from the introduction port 160 to the discharge port 170 may be constant or may vary, but is preferably constant.

The fluidic device of the present embodiment may have a minute flow path commonly used for biomolecules, that is, a micro-flow path. More specifically, the fluidic device of the present embodiment may have a flow path having a maximum cross-sectional area of 0.01 to 1 mm$^2$.

The well array 120 may be constituted by the plurality of wells 110 formed on the surface 131 of the substrate 130. Alternatively, the well array 120 may be constituted by a plurality of through holes constituting the wells 110 in the substrate 130 that is a laminate of a first layer having the plurality of through holes and a second layer which is a flat plate.

The material of the substrate 130 is not particularly limited, and may be, for example, a metal such as stainless steel, titanium, a cobalt-chromium alloy, or a magnesium alloy; glass; a resin material such as general-purpose plastic, medical plastic, or cosmetic plastic; or the like. The substrate 130 may be a laminate of a plurality of members made of these materials. Examples of the resin material include polyethylene, polypropylene, polystyrene, polyamide, polycarbonate, cyclic polyolefin, polylactic acid, polyglycolic acid, polycaprolactone, acryl, urethane resin, silicone resin, fluoresin, aromatic polyether ketone, epoxy resin, and copolymer materials of these resins. More specific examples of the resin material include ZEONEX (registered trademark) and CYTOP (registered trademark). The material of the cover member 140 is not particularly limited, and may be, for example, one of the materials mentioned above as examples of the material of the substrate 130.

The shape of the openings of the wells 110 (i.e., the shape of the wells 110 in plan view of the fluidic device 100 as viewed from the opening side of the wells 110) is not particularly limited, and may be a circular shape, an elliptical shape, or a polygonal shape such as a triangular shape, a quadrangular shape, a pentagonal shape, a hexagonal shape, a heptagonal shape, or an octagonal shape. In the case where the openings of the wells 110 have a circular shape, the center of the circle is the centroid of each of the openings of the wells 110.

The plurality of wells 110 constituting the well array 120 have the same shape and are regularly arranged. However, a few (e.g., one to four) of the plurality of wells may have a different shape from the other wells to use these wells as alignment marks in image capturing and device production. In such a case, substantially all the wells (i.e., the wells except for the above few wells) have the same shape and are regularly arranged.

The arrangement in which the wells are regularly arranged refers to an arrangement in which the centroids of the openings of the wells constituting the well array are arranged in a predetermined pattern. For example, the centroids of the openings of the wells may be arranged to form a quadrangular lattice. In such a case, lines connecting the centroids of the openings of four adjacent wells form a rectangular shape, and preferably form a square shape.

Alternatively, the centroids of the openings of the wells may be arranged to form a triangular lattice (also referred to as a hexagonal lattice). In such a case, lines connecting the centroids of the openings of three adjacent wells form an equilateral triangular shape. In the case where the wells are arranged to form a triangular lattice, the distance between the centroid of the opening of any well and the centroid of the opening of each well closest to the any well is the same for all the wells.

The wells shown in Fig. 1 (c) are arranged to form a triangular lattice. As shown in Fig. 1 (c), the centroid Ca of the opening of the well A of the wells 110 constituting the well array 120, the centroid Cb of the opening of the well B of the wells 110 that is closest to the well A, and a centroid Cc of an opening of a well C of the wells 110 that is closest to both the well A and the well B form an equilateral triangle whose vertices are the centroids Ca, Cb, and Cc. In Fig. 1 (c), lines connecting the centroid Ca of the opening of the well A, the centroid Cb of the opening of the well B, and the centroid Cc of the opening of the well C form an equilateral triangular shape.

In the fluidic device of the present embodiment, a circle having the same area as the opening of each of the wells preferably has a diameter of 1 $\mu$m or more and 50 $\mu$m or less. That is, the lower limit of the diameter of a circle having the same area as the opening of each of the wells is preferably 1 $\mu$m. The upper limit of the diameter of a circle having the same area as the opening of each of the wells may be less than 20 $\mu$m, 19 $\mu$m or less, 18 $\mu$m or less, 17 $\mu$m or less, 16 $\mu$m or less, 15 $\mu$m or less, 14 $\mu$m or less, 13 $\mu$m or less, 12 $\mu$m or less, 11 $\mu$m or less, or 10 $\mu$m or less. Any combination of these lower and upper limits is possible.

In the fluidic device of the present embodiment, the area of the well array 120 refers to the area of a region on the surface 131 in which the wells 110 located in a peripheral edge portion of the well array 120 are inscribed. The ratio of the total area of the openings of the wells 110 of the well array 120 to the area of the well array 120 on the surface 131 (hereinafter, may be referred to as an "opening area ratio") is preferably 30% or more and 90% or less.

The lower limit of the opening area ratio may be 60%, 45%, or 30%. The upper limit of the opening area ratio may be 90%, 80%, or 70%. Any combination of these lower and upper limits is possible. The opening area ratio may be, for example, 30% or more and 90% or less, 45% or more and 80% or less, or 60% or more and 70% or less.

In the fluidic device of the present embodiment, the wells 110 each preferably have a volume of 10 fL or more and 100 pL or less, and more preferably 100 fL or more and 30 pL or less. Furthermore, the total volume of the wells 110 constituting the well array 120 is preferably 0.2 $\mu$L or more and 2.0 $\mu$L or less, and more preferably 0.4 $\mu$L or more and 1.5 $\mu$L or less. Furthermore, the ratio of the diameter of a circle having the same area as the opening of each of the wells 110 to the depth of the wells 110 is preferably 3% or more and 200% or less, more preferably 30% or more and 120% or less, and still more preferably 60% or more and 90% or less. The wells 110 having a size in the above range allow suitable single-molecule detection of biomolecules.

In the fluidic device of the present embodiment, the ratio of the total volume of the wells 110 constituting the well array 120 to the volume of the flow path 150 is preferably 5% or more and 40% or less.

In the fluidic device of the present embodiment, the surface 131 preferably has a water contact angle of 70 degrees or more and 180 degrees or less. Furthermore, the surface 141 of the cover member 140 that faces the well array 120 preferably has a water contact angle of 70 degrees or more and 180 degrees or less. The surfaces 131 and 141 having a contact angle in the above range tend to allow an aqueous medium to be easily isolated in the wells of the well array when a sealing liquid is introduced into the flow path 150.

The fluidic device of the present embodiment can be produced, for example, by the following procedure. First, a substrate is prepared, and a resin layer is formed on a surface of the substrate. Then, through holes are formed in the resin layer to form wells on the substrate. A second resin layer may be provided between the substrate and the resin layer. Alternatively, for example, an anchor layer may be provided to improve adhesion between the substrate and the resin layer.

The resin layer may be made of a material obtained by mixing a colored component with a resin material. In the case where a resin material is used as a resist, the content ratio of a colored component may be, for example, 0.5 mass% or more and 60 mass% or less. The content ratio of a colored component is preferably 5 mass% or more and 55 mass% or less, and more preferably 20 mass% or more and 50 mass% or less.

The content ratio of a colored component may be appropriately set to enable formation of a desired pattern in consideration of the ratio of a photosensitive component and the like contained in the resist. The colored component may be a pigment, and a dispersant may be added as appropriate together with the pigment. In the case where the resin layer is made of a material obtained by mixing a colored component with a resin material, the resin layer has a color derived from the colored component.

Next, through holes are formed in the resin layer. Through holes can be simply and accurately formed using photolithography. In the case where the resin layer is formed by injection molding or the like, through holes can be formed in the same process as the resin layer. Alternatively, through holes can be formed, for example, by performing etching using a pattern mask. When through holes are formed in the resin layer, the substrate 130 having the well array 120 is obtained.

The well array 120 may be formed by forming the plurality of wells 110 on the surface 131 of the substrate 130. In such a case, the resin material described above is injection molded using a mold corresponding to the shape of the well array 120 to prepare the substrate 130 having the well array 120.

Next, the peripheral member 180 is placed around the well array 120. Subsequently, the cover member 140 is placed on the peripheral member 180. Then, the substrate 130, the peripheral member 180, and the cover member 140 are joined together to obtain the fluidic device 100. The peripheral member 180 forms the flow path 150 between the cover member 140 and the substrate 130.

The method of joining together the substrate 130, the peripheral member 180, and the cover member 140 is not particularly limited, and may be a known method such as laser welding, bonding using a double-sided tape, or bonding using an adhesive.

In order to improve adhesion between the substrate 130, the peripheral member 180, and the cover member 140, before bonding, the surfaces of the substrate 130 and the cover member 140 may be subjected to surface treatment for improving the bonding effect. Examples of the surface treatment include (1) chemical surface modification and (2) surface shape processing.

The peripheral member 180 may be integrally formed with the cover member 140. In such a case, the substrate 130 at least part of which has the well array 120 is joined to the cover member 140 integrally formed with the peripheral member 180 to produce the fluidic device 100. The peripheral member 180 integrally formed with the cover member 140 forms the flow path 150 between the cover member 140 and the substrate 130.

The above method can produce the fluidic device. The method of producing the fluidic device is not limited to the above method, and other known methods that can be expected in each step may be used.

[Method of isolating aqueous medium]

In an embodiment, the present invention provides a method of isolating an aqueous medium that includes introducing an aqueous medium into the flow path of the fluidic device described above, and isolating the aqueous medium in the wells of the well array by introducing a sealing liquid into the flow path after introduction of the aqueous medium.

The method of the present embodiment can suppress air bubbles from remaining in the wells of the well array when the wells are filled with an aqueous medium to isolate the aqueous medium in the wells.

Preferably, the aqueous medium and the sealing liquid do not mix with each other or do not easily mix with each other. Specific examples of the sealing liquid include fluorine-based liquids such as FC-40, FC-43, FC-770, FC-72, and FC-3283 (all manufactured by 3M).

The aqueous medium may contain a detection target and a detection reagent. Examples of the detection target include biomolecules such as nucleic acids, proteins, and lipids. The detection reagent is appropriately selected according to the detection method.

In the method of the present embodiment, the aqueous medium may contain a surfactant. In such a case, it is possible to obtain an effect of suppressing air bubbles from remaining in the wells, an effect of reducing nonspecific adsorption in a region between the wells on the surface 131 of the substrate 130, and the like.

The method of the present embodiment may include introducing a filling liquid before introduction of an aqueous medium, and the filling liquid and the aqueous medium may mix with each other or easily mix with each other. In such a case, it becomes easier to suppress air bubbles from remaining in the wells. Specific examples of the filling liquid include an aqueous medium containing a surfactant, an aqueous medium containing no surfactant, and an organic solvent that is easily mixed with an aqueous medium.

The use of a filler containing a surfactant also provides the effect of suppressing air bubbles from remaining in the wells, the effect of reducing nonspecific adsorption in the region between the wells on the surface 131 of the substrate 130, and the like. A surfactant may be contained in both or only one of the aqueous medium and the filler.

In the method of the present embodiment, the aqueous medium and the sealing liquid may be introduced while pressure is being applied from the introduction port of the fluidic device. Introduction of the aqueous medium and the sealing liquid while pressure is being applied may be injection of the aqueous medium and the sealing liquid using a syringe, a pipette, or the like. The method of the present embodiment easily achieves the effect of suppressing air bubbles from remaining in the wells, even when the aqueous medium and the sealing liquid are introduced while pressure is being applied.

[Method of detecting detection target]

In an embodiment, the present invention provides a method of detecting a detection target that includes isolating an aqueous medium containing a detection target and a detection reagent in the wells of the well array of the fluidic device by the method of isolating an aqueous medium described above and then heating the fluidic device to cause a reaction in the wells to generate a signal for detecting the detection target, and detecting the signal.

The method of the present embodiment suppresses air bubbles from remaining in the wells, thus making it easy to accurately detect a detection target.

The aqueous medium contains a detection target and a detection reagent. Examples of the detection target include biomolecules such as nucleic acids, proteins, and lipids. The detection reagent is appropriately selected according to the detection principle.

A reaction for generating a signal may be an isothermal reaction. The signal may be fluorescence. Examples of such a reaction include an invasive cleavage assay (ICA). In the case where an ICA is used as a reaction for generating a signal, the detection target is a nucleic acid, and the detection reagent may be, for example, a flap probe, a flap endonuclease (FEN), a fluorescent substrate, or the like. A flap probe is a nucleic acid fragment that is designed to be hybridized with a nucleic acid as a detection target to form a double-stranded nucleic acid having a flap structure. In the case where an ICA is used as a reaction for generating a signal, the reaction is preferably performed at a reaction temperature of 55°C or more and 75°C or less.

In the method of the present embodiment, in the step of detecting the signal, the signal may be detected by capturing an image of the fluidic device and analyzing the captured image.

The present invention includes other aspects as follows.

[1] A fluidic device including:

a substrate at least part of which has a well array of a plurality of regularly arranged wells that have the same shape as each other and are open to a surface of the substrate; and
a cover member facing the well array, wherein:

a space between the well array and the cover member forms a flow path through which a fluid flows; and
the following formula (1) is satisfied:

$$0.8 \leq Da/Dab < 1 \ ... \ (1)$$

where:

Dab represents a distance between a centroid Ca of an opening of a well A of the plurality of wells of the well array and a centroid Cb of an opening of a well B of the plurality of wells that is closest to the well A; and
Da represents a diameter of a circle having the same area as the opening of the well A.

[2] The fluidic device according to [1], wherein:
a diameter of a circle having the same area as an opening of each of the wells is 1 $\mu$m or more and 15 $\mu$m or less.
[3] The fluidic device according to [1] or [2], wherein:
a ratio of a total area of openings of the wells of the well array to an area of the well array on the surface of the substrate is 60% or more and 80% or less.
[4] The fluidic device according to any one of [1] to [3], wherein:
the wells each have a volume of 100 fL or more and 30 pL or less.
[5] The fluidic device according to any one of [1] to [4], wherein:
a total volume of the wells of the well array is 0.4 $\mu$L or more and 1.5 $\mu$L or less.
[6] The fluidic device according to any one of [1] to [5], wherein:
a ratio of a total volume of the wells of the well array to a volume of the flow path is 5% or more and 100% or less.
[7] The fluidic device according to any one of [1] to [6], wherein:
a ratio of a diameter of a circle having the same area as an opening of each of the wells to a depth of the wells is 60% or more and 90% or less.
[8] The fluidic device according to any one of [1] to [7], wherein:
the surface of the substrate has a water contact angle of 70 degrees or more and 120 degrees or less.
[9] The fluidic device according to any one of [1] to [8], wherein:
the cover member has a surface facing the well array, the surface of the cover member having a water contact angle of 70 degrees or more and 120 degrees or less.
[10] A method of isolating an aqueous medium, the method including:

introducing an aqueous medium into the flow path of the fluidic device according to any one of [1] to [9]; and
isolating the aqueous medium in the wells of the well array by introducing a sealing liquid into the flow path after introduction of the aqueous medium.

[11] A method of detecting a detection target, the method including:

isolating an aqueous medium containing a detection target and a detection reagent by the method according to [10] and then heating the fluidic device to cause a reaction in the wells to generate a signal for detecting the detection target; and
detecting the signal.

[12] The method according to [11], wherein:
the detection target is a biomolecule.
[13] The method according to [11] or [12], wherein:
the reaction is an isothermal reaction.
[14] The method according to any one of [11] to [13], wherein:
the signal is fluorescence.

[Examples]

[Preparation Example 1]

(Preparation of fluidic device of Example 1)

A substrate made of cyclic polyolefin (product number "ZEONOR 1020R", manufactured by Zeon Corporation) and a cover member made of cyclic polyolefin (product number "ZEONOR 1020R", manufactured by Zeon Corporation) were each prepared by injection molding.

The substrate had a thickness of 0.6 mm. A well array was formed on a surface of the substrate. Wells of the well array had a circular opening. The wells had a diameter of 10 $\mu$m and a depth of 15 $\mu$m. The wells each had a volume of 824 fL, and the total volume of the wells was 0.76 $\mu$L. The ratio of the diameter of the openings of the wells to the depth of the wells was 66.7%. The well array was formed by arranging a plurality of wells to form a triangular lattice in a region having a size of 6.0 mm $\times$ 30.0 mm on the substrate so that the distance between the center of each well and the center of each closest well was 12 $\mu$m. The surface of the substrate had a water contact angle of 89 degrees.

The cover member was integrally formed with a step portion (peripheral member). The height of the step portion was adjusted to be 30 $\mu$m to form a flow path having a height of 30 $\mu$m. The actual height of the flow path was measured using a contact-type measurement device (product number "TALYSURF PGI1240", manufactured by Taylor Hobson). The flow path had a volume of approximately 6 $\mu$L, and the ratio of the total volume of the wells to the volume of the flow path was approximately 12.7%. A surface of the cover member facing the well array had a water contact angle of 89 degrees.

Subsequently, the substrate was joined to the step portion of the cover member by laser welding to prepare a microfluidic device of Example 1.

[Preparation Example 2]

(Preparation of fluidic devices of Comparative Examples 1 and 2)

A microfluidic device of Comparative Example 1 was prepared in the same manner as in Example 1 except that the distance between the center of each well and the center of each closest well was set to 16 $\mu$m. The well array was formed in a region having the same area as the region in which the well array was formed in Example 1, and the total volume of the wells was 0.63 $\mu$L.

A microfluidic device of Comparative Example 2 was prepared in the same manner as in Example 1 except that the distance between the center of each well and the center of each closest well was set to 20 $\mu$m. The well array was formed in a region having the same area as the region in which the well array was formed in Example 1, and the total volume of the wells was 0.4 $\mu$L.

[Experimental Example 1]

An aqueous medium was introduced into the fluidic devices of Example 1, Comparative Example 1, and Comparative Example 2, and the fluidic devices were evaluated for resistance to occurrence of air bubbles remaining in the wells.

First, an aqueous medium (i.e., a buffer) having a composition shown in Table 1 was injected into the flow path formed between the substrate and the cover member of the fluidic devices.

[Table 1]

| Composition of buffer | |
|---|---|
| Components | Final concentration |
| MgCl$_2$ | 20 mM |
| Tris pH8.5 | 50 mM |
| Tween20 | 0.05% |
| Distilled water | Remainder |

The buffer was injected into the flow path while bright field observation of the fluidic devices was performed from the substrate side using a microscope (product number "BZ-710", manufactured by Keyence Corporation). A 10× objective lens was used, and the exposure time was 20 milliseconds. Then, the amount of buffer required to completely remove air bubbles in the wells was measured.

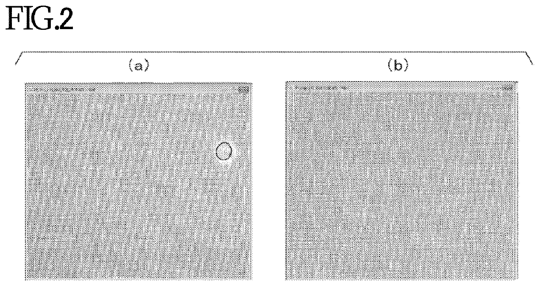

Figs. 2 (a) and (b) are photographs showing the results of bright field observation of the well array when the buffer was supplied to the fluidic device of Example 1. Fig. 2 (a) is a photograph showing the result obtained by supplying 20 μL of buffer, and Fig. 2 (b) is a photograph showing the result obtained by supplying 50 μL of buffer. The observation images in Figs. 2 (a) and (b) had a size of 3,600 μm × 2,700 μm. The results showed that in the fluidic device of Example 1, 50 μL of buffer was sufficient to remove air bubbles remaining in the wells.

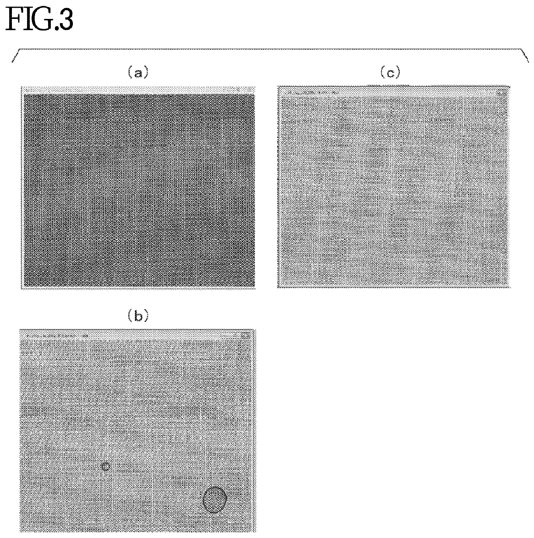

Figs. 3 (a) to (c) are photographs showing the results of bright field observation of the well array when the buffer was supplied to the fluidic device of Comparative Example 1. Fig. 3 (a) is a photograph showing the result obtained by supplying 100 μL of buffer, Fig. 3 (b) is a photograph showing the result obtained by supplying 200 μL of buffer, and Fig. 3 (c) is a photograph showing the result obtained by supplying 300 μL of buffer. The observation images in Figs. 3 (a) to (c) had a size of 3,600 μm × 2,700 μm. The results showed that in the fluidic device of Comparative Example 1, 300 μL of buffer was required to sufficiently remove air bubbles remaining in the wells.

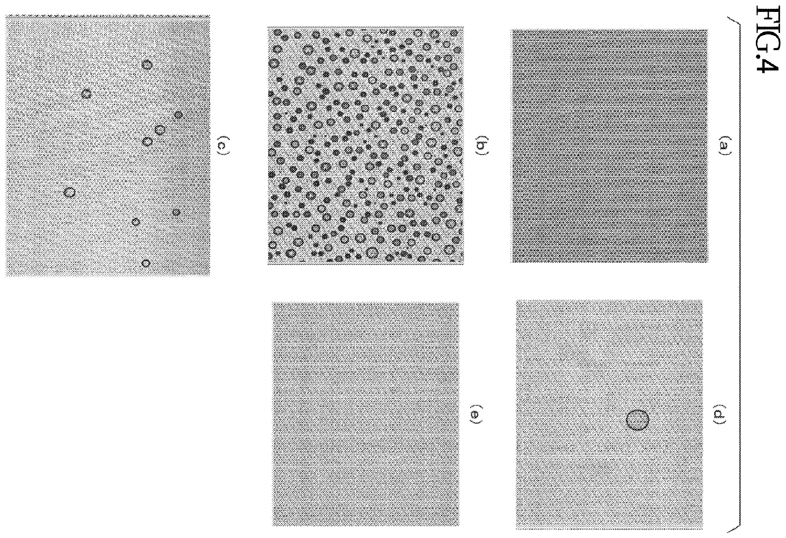

Figs. 4 (a) to (e) are photographs showing the results of bright field observation of the well array when the buffer was supplied to the fluidic device of Comparative Example 2. Fig. 4 (a) is a photograph showing the result obtained by supplying 100 μL of buffer, Fig. 4 (b) is a photograph showing the result obtained by supplying 200 μL of buffer, Fig. 4 (c) is a photograph showing the result obtained by supplying 300 μL of buffer, Fig. 4 (d) is a photograph showing the result obtained by supplying 400 μL of buffer, and Fig. 4 (e) is a photograph showing the result obtained by supplying 500 μL of buffer. The observation images in Figs. 4 (a) to (e) had a size of 3,600 μm × 2,700 μm. The results showed that in the fluidic device of Comparative Example 2, 500 μL of buffer was required to sufficiently remove air bubbles remaining in the wells.

Table 2 shows, for the fluidic devices, the diameter of the wells, the depth of the wells, the distance between the center of each well and the center of each closest well (center-to-center distance), the ratio of the diameter of the wells to the center-to-center distance (diameter/center-to-center distance), the height of the flow path, the opening area ratio, the amount of buffer required to completely remove air bubbles in the wells, and the evaluation results on the resistance to occurrence of air bubbles remaining in the wells.

The opening area ratio was the ratio of the total area of the openings of the wells to the area of the region having a size of 6.0 mm × 30.0 mm in which the well array was formed. The evaluation results on the resistance to occurrence of air bubbles remaining in the wells were based on the following evaluation criteria.

(Evaluation criteria)

Good: Amount of buffer required to completely remove air bubbles in the wells was 50 μL or less
Poor: Amount of buffer required to completely remove air bubbles in the wells exceeded 50 μL

[Table 2]

| | Example 1 | Comparative Example 1 | Comparative Example 2 |
|---|---|---|---|
| Diameter (μm) | 10 | 10 | 10 |
| Depth of wells (μm) | 15 | 15 | 15 |
| Center-to-center distance (μm) | 12 | 16 | 20 |

(continued)

|  | Example 1 | Comparative Example 1 | Comparative Example 2 |
|---|---|---|---|
| Diameter/Center-to-center distance | 0.833 | 0.625 | 0.5 |
| Height of flow path (μm) | 30 | 30 | 30 |
| Opening area ratio | 63 | 35 | 23 |
| Amount of buffer supplied (μL) | 50 | 300 | 500 |
| Evaluation results | Good | Poor | Poor |

The results revealed that air bubbles tended to be less likely to remain in the wells when the ratio (diameter/center-to-center distance) of the diameter of the wells to the distance (center-to-center distance) between the center of each well and the center of each closest well was 0.8 or more.

[Experimental Example 2]

(Simulation 1)

The resistance to occurrence of air bubbles remaining in wells of a fluidic device was examined by simulation. Simulation was performed using software (product name "Ansys Fluent", manufactured by ANSYS, Inc.).
In the simulation, a liquid having physical properties shown in Table 4 was supplied to a flow path of a fluidic device having a well array with a shape shown in Table 3. Table 3 shows, for the fluidic device, the diameter of wells of the well array, the depth of the wells, the distance between the center of each well and the center of each closest well (center-to-center distance), the ratio of the diameter of the wells to the center-to-center distance (diameter/center-to-center distance), the height of the flow path, the taper angle, and the presence of burrs or rounded corners. In Table 4, wettability indicates a value obtained by reflecting physical properties of the fluidic device. A taper refers to a shape of a well gradually narrowing from an opening of the well toward a bottom of the well having a different area from the opening of the well. The taper angle indicates the angle of a side surface of a well with respect to a surface of a substrate having well openings. When the taper angle is 0°, the side surface of the well and the surface of the substrate having the well openings form an angle of 90°.
The fluidic device subjected to simulation in the present experimental example corresponded to the fluidic device of Example 1.

[Table 3]

|  | Simulation 1 |
|---|---|
| Diameter (μm) | 10 |
| Depth of wells (μm) | 15 |
| Center-to-center distance (μm) | 12 |
| Diameter/Center-to-center distance | 0.833 |
| Height of flow path (μm) | 30 |
| Taper angle (°) | 0 |
| Burrs or rounded corners | None |

[Table 4]

| Physical properties of liquid | |
|---|---|
| Viscosity (Pa·s) | 0.0012 |
| Density (Kg/m$^3$) | 789.24 |
| Surface tension (N/m) | 12 |
| Diameter/Center-to-center distance | 0.022 |

(continued)

| Physical properties of liquid | |
|---|---|
| Wettability (°) | 10 |

In the simulation, the liquid was supplied at a flow rate of 33 mm/second until 0.027 seconds after the supply of the liquid was started, and the liquid was supplied at a flow rate of 330 mm/second from 0.027 to 0.047 seconds after the start of the supply of the liquid.

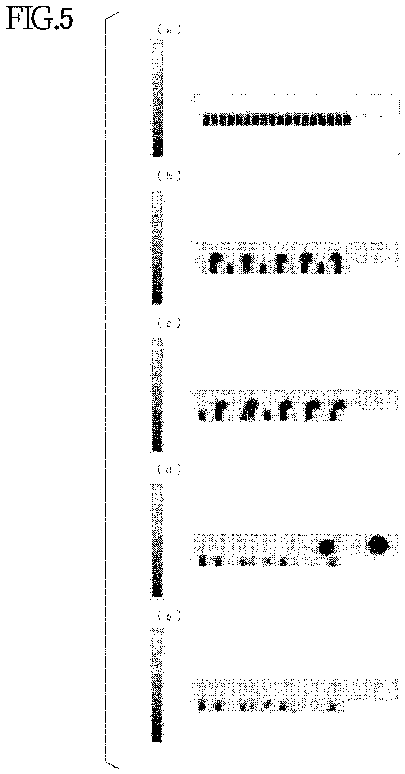

Figs. 5 (a) to (e) are cross-sectional views of the fluidic device showing the results of the simulation. Fig. 5 (a) shows the result of the simulation before the supply of the liquid was started, Fig. 5 (b) shows the result of the simulation at 0.02 seconds after the start of the supply of the liquid, Fig. 5 (c) shows the result of the simulation at 0.03 seconds after the start of the supply of the liquid, Fig. 5 (d) shows the result of the simulation at 0.04 seconds after the start of the supply of the liquid, and Fig. 5 (e) shows the result of the simulation at 0.047 seconds after the start of the supply of the liquid. In Figs. 5 (a) to (e), the scale indicates an outline of air bubbles and the liquid.

The results revealed that after the supply of the liquid was started, air bubbles in the wells gathered and combined together, and the combined air bubbles flowed while other air bubbles became incorporated into the combined air bubbles.

[Experimental Example 3]

(Simulation 2)

The resistance to occurrence of air bubbles remaining in wells of a fluidic device was examined by simulation. Simulation was performed using software (product name "Ansys Fluent", manufactured by ANSYS, Inc.).

In the simulation, a liquid having the physical properties shown in Table 4 was supplied to a flow path of a fluidic device having a well array with a shape shown in Table 5.

The fluidic device subjected to the simulation in the present experimental example corresponded to the fluidic device of Comparative Example 1.

[Table 5]

| | Simulation 2 |
|---|---|
| Diameter ($\mu$m) | 10 |
| Depth of wells ($\mu$m) | 15 |
| Center-to-center distance ($\mu$m) | 16 |
| Diameter/Center-to-center distance | 0.625 |
| Height of flow path ($\mu$m) | 30 |
| Taper angle (°) | 0 |
| Burrs or rounded corners | None |

In the simulation, the liquid was supplied at a flow rate of 33 mm/second until 0.02 seconds after the supply of the liquid was started, and the liquid was supplied at a flow rate of 330 mm/second from 0.02 seconds after the start of the supply of the liquid.

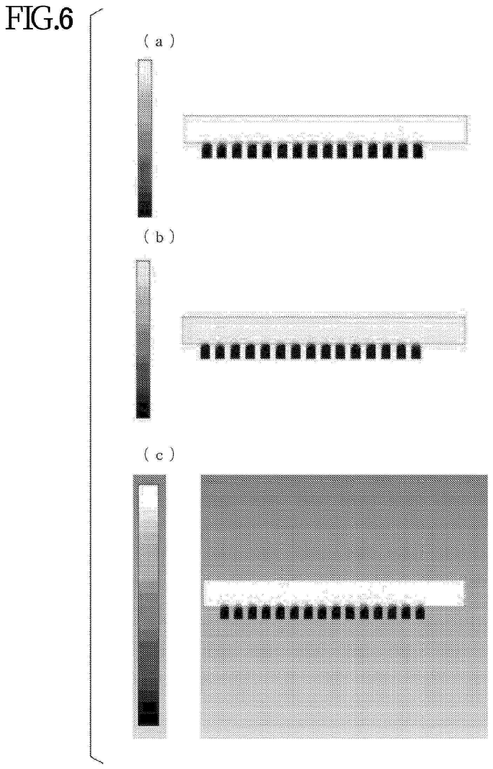

Figs. 6 (a) to (c) are cross-sectional views of the fluidic device showing the results of the simulation. Fig. 6 (a) shows the result of the simulation before the supply of the liquid was started, Fig. 6 (b) shows the result of the simulation at 0.02 seconds after the start of the supply of the liquid, and Fig. 6 (c) shows the result of the simulation at 0.03 seconds after the start of the supply of the liquid. In Figs. 6 (a) to (c), the scale indicates an outline of air bubbles and the liquid.

The results revealed that even when the liquid was supplied to the fluidic device, air bubbles in the wells did not gather and combine together, and the air bubbles remained in the wells.

[Experimental Example 4]

(Simulation 3)

The resistance to occurrence of air bubbles remaining in wells of a fluidic device was examined by simulation. Simulation was performed using software (product name "Ansys Fluent", manufactured by ANSYS, Inc.).

In the simulation, a liquid having the physical properties shown in Table 4 was supplied to a flow path of a fluidic device having a well array with a shape shown in Table 6.

[Table 6]

|  | Simulation 3 |
| --- | --- |
| Diameter ($\mu$m) | 20 |
| Depth of wells ($\mu$m) | 15 |
| Center-to-center distance ($\mu$m) | 22 |
| Diameter/Center-to-center distance | 0.909 |
| Height of flow path ($\mu$m) | 30 |
| Taper angle (°) | 0 |
| Burrs or rounded corners | None |

In the simulation, the liquid was supplied at a flow rate of 33 mm/second until 0.02 seconds after the supply of the liquid was started.

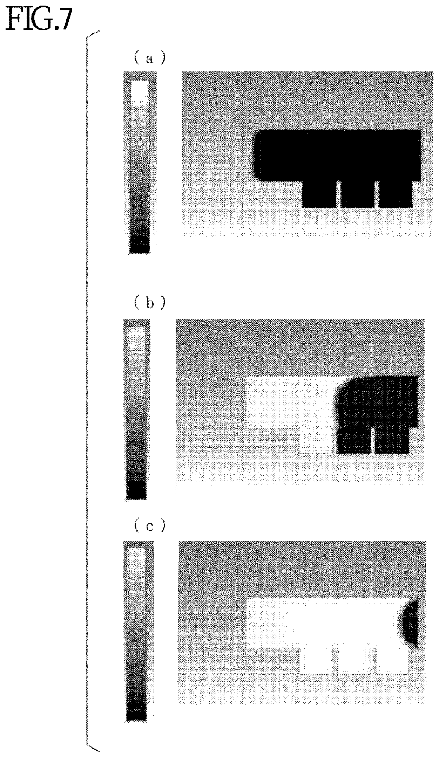

Figs. 7 (a) to (c) are cross-sectional views of the fluidic device showing the results of the simulation. Fig. 7 (a) shows the result of the simulation before the supply of the liquid was started, Fig. 7 (b) shows the result of the simulation at 0.01 seconds after the start of the supply of the liquid, and Fig. 7 (c) shows the result of the simulation at 0.02 seconds after the start of the supply of the liquid. In Figs. 7 (a) to (c), the scale indicates an outline of air bubbles and the liquid.

The results revealed that air bubbles were less likely to remain in the wells having a large diameter.

[Experimental Example 5]

(Simulation 4)

The resistance to occurrence of air bubbles remaining in wells of a fluidic device was examined by simulation. Simulation was performed using software (product name "Ansys Fluent", manufactured by ANSYS, Inc.).

In the simulation, a liquid having the physical properties shown in Table 4 was supplied to a flow path of a fluidic device having a well array with a shape shown in Table 7.

[Table 7]

|  | Simulation 4 |
| --- | --- |
| Diameter ($\mu$m) | 30 |
| Depth of wells ($\mu$m) | 15 |
| Center-to-center distance ($\mu$m) | 32 |
| Diameter/Center-to-center distance | 0.938 |
| Height of flow path ($\mu$m) | 30 |
| Taper angle (°) | 0 |
| Burrs or rounded corners | None |

In the simulation, the liquid was supplied at a flow rate of 33 mm/second until 0.02 seconds after the supply of the liquid was started.

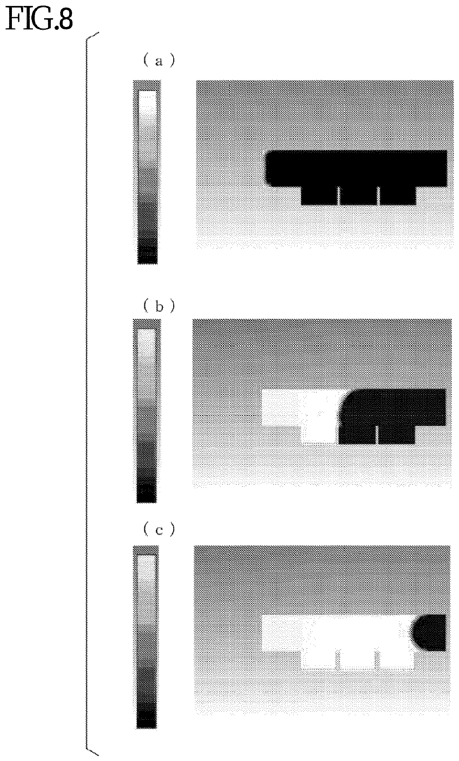

Figs. 8 (a) to (c) are cross-sectional views of the fluidic device showing the results of the simulation. Fig. 8 (a) shows the result of the simulation before the supply of the liquid was started, Fig. 8 (b) shows the result of the simulation at 0.01 seconds after the start of the supply of the liquid, and Fig. 8 (c) shows the result of the simulation at 0.02 seconds after the start of the supply of the liquid. In Figs. 8 (a) to (c), the scale indicates an outline of air bubbles and the liquid.

The results revealed that air bubbles were less likely to remain in the wells having a large diameter.

[Industrial Applicability]

The present invention provides a technique for suppressing air bubbles from remaining in wells of a fluidic device having a well array when an aqueous medium is introduced into the wells. Furthermore, the method according to the present invention of detecting a detection target can suppress air bubbles from remaining in wells of a fluidic device having a well array when an aqueous medium is introduced into the wells and isolated in the wells and a signal is generated and detected, thus allowing detection of a detection target with higher efficiency.

[Reference Signs List]

| 100 | Fluidic device |
| 110 | Well |
| 120 | Well array |
| 130 | Substrate |
| 140 | Cover member |
| 131, 141 | Surface |
| 150 | Flow path |
| 160 | Introduction port |
| 170 | Discharge port |
| 180 | Peripheral member |
| A, B, C | Well |
| Da | Diameter |
| Dab | Distance |
| Ca, Cb, Cc | Centroid |

**Claims**

1. A fluidic device comprising:

   a substrate at least part of which has a well array of a plurality of regularly arranged wells that have the same shape as each other and are open to a surface of the substrate; and
   a cover member facing the well array, wherein:

   a space between the well array and the cover member forms a flow path through which a fluid flows; and
   the following formula (1) is satisfied:

$$0.8 \leq Da/Dab < 1 \ ... \ (1)$$

   where:

   Dab represents a distance between a centroid Ca of an opening of a well A of the plurality of wells of the well array and a centroid Cb of an opening of a well B of the plurality of wells that is closest to the well A; and
   Da represents a diameter of a circle having the same area as the opening of the well A.

2. The fluidic device according to claim 1, wherein:
   a diameter of a circle having the same area as an opening of each of the wells is 1 $\mu$m or more and 50 $\mu$m or less.

3. The fluidic device according to claim 1 or 2, wherein:
   a ratio of a total area of openings of the wells of the well array to an area of the well array on the surface of the substrate is 30% or more and 90% or less.

4. The fluidic device according to any one of claims 1 to 3, wherein:
the wells each have a volume of 10 fL or more and 100 pL or less.

5. The fluidic device according to any one of claims 1 to 4, wherein:
a total volume of the wells of the well array is 0.2 μL or more and 2.0 μL or less.

6. The fluidic device according to any one of claims 1 to 5, wherein:
a ratio of a total volume of the wells of the well array to a volume of the flow path is 5% or more and 40% or less.

7. The fluidic device according to any one of claims 1 to 6, wherein:
a ratio of a diameter of a circle having the same area as an opening of each of the wells to a depth of the wells is 3% or more and 200% or less.

8. The fluidic device according to any one of claims 1 to 7, wherein:
the surface of the substrate has a water contact angle of 70 degrees or more and 180 degrees or less.

9. The fluidic device according to any one of claims 1 to 8, wherein:
the cover member has a surface facing the well array, the surface of the cover member having a water contact angle of 70 degrees or more and 180 degrees or less.

10. A method of isolating an aqueous medium, the method comprising:

introducing an aqueous medium into the flow path of the fluidic device according to any one of claims 1 to 9; and
isolating the aqueous medium in the wells of the well array by introducing a sealing liquid into the flow path after introduction of the aqueous medium.

11. A method of detecting a detection target, the method comprising:

isolating an aqueous medium containing a detection target and a detection reagent by the method according to claim 10 and then heating the fluidic device to cause a reaction in the wells to generate a signal for detecting the detection target; and
detecting the signal.

12. The method according to claim 11, wherein:
the detection target is a biomolecule.

13. The method according to claim 11 or 12, wherein:
the reaction is an isothermal reaction.

14. The method according to any one of claims 11 to 13, wherein:
the signal is fluorescence.

# FIG.1

FIG.2

(a)  (b)

# FIG.3

(a)

(c)

(b)

# FIG.4

(a)

(d)

(b)

(e)

(c)

FIG.5

( a )

( b )

( c )

( d )

( e )

FIG.6

(a)

(b)

(c)

FIG.7

(a)

(b)

(c)

FIG.8

( a )

( b )

( c )

## INTERNATIONAL SEARCH REPORT

| International application No. |
|---|
| **PCT/JP2021/031830** |

**A. CLASSIFICATION OF SUBJECT MATTER**

*G01N 37/00*(2006.01)i; *C12M 1/00*(2006.01)i; *G01N 35/02*(2006.01)i; *G01N 35/08*(2006.01)i; *B01J 19/00*(2006.01)i; *G01N 21/03*(2006.01)i

FI:   G01N35/02 A; G01N35/08 A; G01N37/00 101; B01J19/00 321; C12M1/00 A; G01N21/03 Z

According to International Patent Classification (IPC) or to both national classification and IPC

**B. FIELDS SEARCHED**

Minimum documentation searched (classification system followed by classification symbols)

G01N37/00; C12M1/00; G01N35/02; G01N35/08; B01J19/00; G01N21/03

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2019/046307 A1 (CELSEE DIAGNOSTICS, INC.) 07 March 2019 (2019-03-07) paragraphs [0044]-[0070], fig. 1-9 | 1-9 |
| Y | | 10-14 |
| Y | WO 2017/115863 A1 (TOPPAN PRINTING CO., LTD.) 06 July 2017 (2017-07-06) paragraphs [0042], [0060] | 10-14 |
| A | JP 2007-525647 A (AURORA DISCOVERY INC.) 06 September 2007 (2007-09-06) paragraph [0049] | 1-14 |
| A | WO 2016/072416 A1 (TOPPAN PRINTING CO., LTD.) 12 May 2016 (2016-05-12) entire text, all drawings | 1-14 |
| A | WO 2015/115635 A1 (TOPPAN PRINTING CO., LTD.) 06 August 2015 (2015-08-06) entire text, all drawings | 1-14 |

☐ Further documents are listed in the continuation of Box C.  ☑ See patent family annex.

\*    Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| **19 October 2021** | **02 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/031830**

| Patent document cited in search report | | | Publication date (day/month/year) | Patent family member(s) | | | Publication date (day/month/year) |
|---|---|---|---|---|---|---|---|
| WO | 2019/046307 | A1 | 07 March 2019 | US | 2019/0060902 | A1 | |
| | | | | CN | 111295245 | A | |
| | | | | JP | 2020-532984 | A | |
| WO | 2017/115863 | A1 | 06 July 2017 | US | 2018/0299380 | A1 | |
| | | | | paragraphs [0066]-[0068], [0094]-[0097] | | | |
| JP | 2007-525647 | A | 06 September 2007 | US | 2004/098764 | A1 | |
| | | | | paragraphs [0087] | | | |
| | | | | WO | 2004/098764 | A2 | |
| WO | 2016/072416 | A1 | 12 May 2016 | US | 2017/0233790 | A1 | |
| | | | | entire text, all drawings | | | |
| | | | | EP | 3216852 | A1 | |
| | | | | CN | 107109320 | A | |
| WO | 2015/115635 | A1 | 06 August 2015 | US | 2016/0333400 | A1 | |
| | | | | entire text, all drawings | | | |
| | | | | EP | 3101115 | A1 | |
| | | | | CN | 105940096 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020147507 A
- WO 2015115635 A